# EUROPEAN PATENT APPLICATION

(11) **EP 2 631 061 A1**
(43) Date of publication of application: **28.08.2013**
(21) Application number: 12382063.1
(22) Date of filing: 22.02.2012
(51) Int. Cl.: B29C 49/04, B65D 81/28

(54) **Plastic container with antimicrobial properties and method of manufcture thereof**

(71) Applicant: Sotralentz Packaging S.A.S., 67320 Drulingen (FR)
(72) Inventor: González Teresa, Yolanda, 01213 COMUNION (Alava) (ES); Galindo Galiana, Begoña, 46980 PATERNA (Valencia) (ES); Roca Blay, Luis, 46980 PATERNA (Valencia) (ES)
(74) Representative: Carpintero Lopez, Francisco

(57) **Abstract**

The present invention relates to a plastic container (1) with antimicrobial properties formed by at least one layer. Of said at least one layer of the container, at least the innermost layer (2), which will be in contact with the product to be contained within the container, comprises an antimicrobial formulation incorporated therein comprising an antimicrobial active ingredient. The invention also discloses a method of manufacture by means of extruding and blowing a container with antimicrobial properties formed by at least one layer as described above.

## Description

### Technical Field of the Invention

The present invention generally relates to the field of transport, storage and logistics, specifically in the organization of containers containing different products. More specifically, the invention relates to the field of containers for the transport of products, for example those known as intermediate bulk containers (IBC), as well as containers used for the storage of products, for example food products and potable water.

### State of the Art

So-called intermediate bulk containers (IBC), which have different capacities, preferably comprising a capacity of 1000 liters are already known in the art, and they are formed by a hollow plastic container, preferably of high-density polyethylene. The plastic container can optionally have a rigid outer wrapping protecting the container from accidental drops and blows.

These IBC containers are mainly intended for the transport and storage of a wide range of different products, including food products, products from the cosmetic and pharmaceutical industry, including products that will be used in the production processes of industries of this type.

Likewise, there are also different containers used for the storage of potable water in facilities relating to the field of construction, and they are also valid for the storage of chemical and food products. The capacities of these containers greatly vary: from 200 liters to 5000 liters. They are generally manufactured by means of a single layer, although it is also possible to manufacture them with several identical or different layers.

The mentioned containers are usually manufactured from polyolefins, for example high-density polyethylene, which can be formulated with different additives, fundamentally for protection against UV radiation and additives for thermal and mechanical protection to prevent degradation during processing.

According to the current techniques normally used in this field, both plastic containers not yet used, being stored pending use, and plastic containers already used and in contact or having been in direct in contact with different products, can be contaminated with different microorganisms which proliferate on the surface without being able to prevent uncontrolled growth. Particularly given the proposed application of these containers (containing foods, cosmetic products, pharmaceutical products, potable water,...) this contamination is extremely undesirable.

Microorganisms, and specifically bacteria, are a considerable source of problems in the food chain and in potable water distribution. Some of them are very resistant to thermal and chemical treatments and survive on surfaces of plastic containers for a long time. Additionally these microorganisms can also bring about changes in the physical and chemical properties of foods, water, and cosmetic and pharmaceutical formulations. Another example in which the use of plastic containers is particularly critical is in hospitals and generally in pressure groups installed for distributing potable water in the possible event of a pressure drop in the system.

Another consequence of the proliferation of microorganisms on plastic surfaces is that the base polymer gradually degrades, which entails organoleptic problems that can also be a source of contamination of the product, as well as a reduction of the mechanical and structural properties of the plastic container.

A possible solution to this contamination problem would be the characterization of each plastic container before or during use to be able to determine possible microorganism contamination. However, this solution is unfeasible from both the technical and economic points of view because it requires a large amount of manual labor and financial investment.

Therefore, it can be seen that it is extremely necessary in the art to provide a new container that solves these problems. Specifically, there is a need for a container that is capable of minimizing to the greatest possible extent microorganism contaminations in the product contained therein, thereby providing safety for the user as well as savings in terms of cost and time. A container of this type will also provide environmental advantages as it prevents wastes of contaminated products that cannot be decontaminated as well as energy consumption as a consequence of decontamination processes of plastic containers with chemical products or by means of thermal processes.

### Summary of the Invention

The present invention relates in a first aspect to a plastic container with antimicrobial properties formed by at least one layer. The container of the invention is characterized in that it comprises an antimicrobial formulation made up of a plastic matrix and an active ingredient containing antimicrobial agents incorporated in at least one inner layer of the container which will be in contact with the product to be contained within the container. In other words, in the event that the container comprises a plurality of layers, at least the innermost layer, which is intended for coming into contact with the product contained within the container, will comprise said antimicrobial formulation incorporated therein. The amount of active ingredient is preferably equal to or greater than 0.1 % by weight with respect to the amount of plastic material of the mentioned inner layer and less than 3% by weight with respect to the amount of plastic material of the mentioned inner layer

The antimicrobial active ingredient is selected preferably from the group consisting of agents based on silver, copper, zinc,

The active ingredient is preferably predispersed in a material selected from the group consisting of carbonates, ZnO and SiO₂.

The plastic matrix in which the predispersed active ingredients are integrated is preferably a polyolefin.

A second aspect of the present invention also discloses a method of manufacturing a container with antimicrobial properties formed by at least one layers comprising the steps of:
- placing a mass of plastic material in an extrusion press configured to form a layer of the container;
- adding a specific amount of anti-microbial formulation made up of a plastic matrix and an active ingredient comprising antimicrobial agents;
- mixing the mass of plastic material and the antimicrobial formulation in the extrusion press;
- extruding the mixture of the mass of plastic material and the antimicrobial formulation, comprising a considerably tubular geometry, towards the inside of a mold comprising the geometry of the container;
- injecting air into the tube of the mixture, such that it swells up and occupies the inner cavity of the mold; and
- allowing it to cool until the container has the consistency suitable for being able to remove the mold without damaging the formed container.

The process can comprise additional steps of extruding and blowing additional layers on the outside of the previously formed innermost layer.

The additional layers can comprise a mass of plastic material mixed with a specific amount of antimicrobial formulation.

The innermost layer of the container obtained with the process can contain a percentage by weight of active ingredient less than 3% and greater than or equal to 0.1 % with respect to the weight of said innermost layer.

The antimicrobial active ingredient is selected from the group consisting of agents based on silver, copper and zinc.

The active ingredient can be predispersed in a material selected from the group consisting of carbonates, ZnO and SiO₂.

### Brief Description of the Drawings

To complement the description and for the purpose of aiding to better understand the features of the invention according to a preferred practical embodiment thereof, a set of drawings is attached to the present description as an integral part thereof in which the following has been depicted with an illustrative and non-limiting character:
Figure 1 shows a schematic perspective view of a plastic container formed by means of extrusion and blowing according to a preferred embodiment of the present invention.
Figure 2 shows a cross-section view of a container of multiple layers according to the preferred embodiment of the present invention in which the inner layer is the one containing the antimicrobial formulation.

### Preferred Embodiment of the Invention

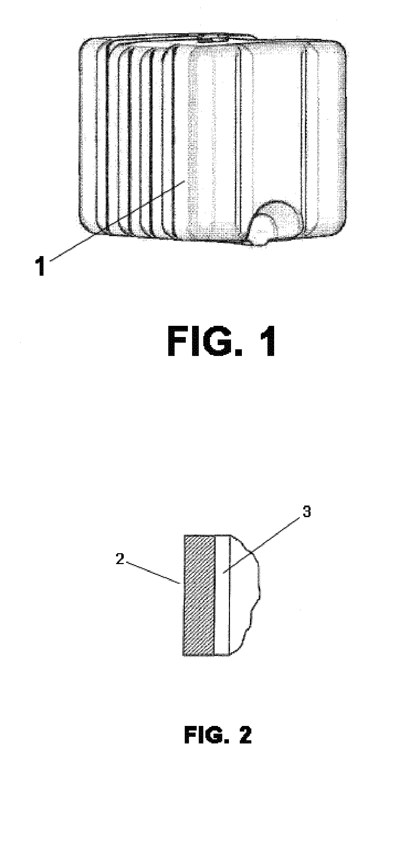

Reference is made simultaneously to Figures 1 and 2, which show a preferred embodiment of the plastic container (1) of the present invention comprising a plurality of layers (2, 3). The layer (2) of the container (1) is the innermost layer and it is the layer intended for coming into contact with the product that will be contained in the container (1), therefore the layer (2) comprises an antimicrobial formulation in turn comprising an antimicrobial active ingredient.

Said antimicrobial formulation preferably comprises an antimicrobial active ingredient in an amount less than 3% by weight with respect to the weight of said inner layer (2) and equal to or greater than 0.1% by weight with respect to the weight of said innermost layer (2).

According to the preferred embodiment of the invention, the antimicrobial formulation is formulated from a plastic matrix, preferably, although not in a limiting manner, of the family of polyolefins (for example high-density polyethylene or low-density polyethylene), and an antimicrobial active ingredient selected from the group consisting of agents based on silver, copper, zinc, supported and predispersed in a material selected from the group consisting of carbonates, ZnO and SiO₂.

A particularity of this antimicrobial formulation is that once it is applied in the plastic container (1), it is permanent because the active ingredient is neither consumed nor reduced with the passage of time. This is a considerable advantage with respect to other formulations the antimicrobial properties of which are reduced or even disappear over time because the active ingredient is gradually released by migration.

The antimicrobial formulation of the present invention therefore has a dual advantage:
- on one hand, it assures the antimicrobial properties in the plastic container (1) over time.
- on the other hand, it prevents the phenomena of migration of the active ingredient towards the product to be contained therein, which prevents the produce from being contaminated by the antimicrobial formulation.

The container (1) according to the preferred embodiment of the present invention as described above can be applied for use in multiple technical fields, for example in the field of the transport and storage of bulk products selected from the group comprising products from the food, cosmetic, pharmaceutical, chemical and potable water industries. The container can be used as a storage container for potable water in facilities relating to the field of construction.

Furthermore, and as described below, according to the preferred embodiment of the invention the plastic container (1) with antimicrobial properties is manufactured by means of an extrusion and blowing process in a mold forming the geometry of said container (1), the antimicrobial formulation being added prior to the step of extrusion. However, persons skilled in the art will obviously understand that other types of methods of manufacture known in the art can be applied for obtaining a plastic container (1) with antimicrobial properties according to the present invention.

The method of manufacturing a container with antimicrobial properties according to the preferred embodiment of the present invention comprises the steps of:
- placing a mass of plastic material in an extrusion press configured to form a layer of the container;
- adding a specific amount of antimicrobial formulation containing an antimicrobial active ingredient;
- mixing the mass of plastic material and the antimicrobial formulation in the extrusion press;
- extruding the mixture of the mass of plastic material and the antimicrobial formulation, comprising a considerably tubular geometry, towards the inside of a mold comprising the geometry of the container;
- injecting air into the tube of the mixture, such that it swells up and occupies the inner cavity of the mold; and
- allowing it to cool until the container has the consistency suitable for being able to remove the mold without damaging the formed container.

It must be observed that by means of the method described above according to the preferred embodiment of the present invention a plastic container with antimicrobial properties having a single layer is obtained. Obviously, a similar method can be applied to prepare a plurality of layers of which, according to a preferred embodiment, only the innermost layer (2) comprises an antimicrobial formulation incorporated therein. According to another preferred embodiment of the invention, the method described above is used to manufacture a container of multiple layers, all the layers comprising an antimicrobial formulation incorporated therein.

Persons skilled in the art will easily understand that the only difference in the method of manufacturing a layer that does not comprise an antimicrobial formulation incorporated therein with respect to the method described above is the omission of the step of adding the antimicrobial formulation.

Therefore, as a result of the plastic container with antimicrobial properties and the method of manufacture thereof of the present invention, multiple advantages are achieved with respect to the prior art, such as:
- protecting the plastic container from microorganism contaminations, which thus allows improving hygienic conditions in the first use thereof;
- protecting the inner product to be contained therein against contaminations due to uncontrolled growths of microorganisms on the plastic surface;
- preventing degradation of the polymer chains of the plastic containers thus improving their service life.

A practical example for the manufacture of a plastic container with antimicrobial properties according to the present invention is described below by way of illustration.

### Example

### Example 1:

Plastic containers having a 1000 l capacity made of high-density polyethylene were manufactured by means of coextrusion and blowing. Said containers were made up of two layers of different thicknesses.

The coextrusion technique used has the economic advantage of being able to add relatively expensive compounds in very thin layers and not throughout the entire mass of the container, i.e., not in all the layers forming the container, thus providing considerable economic savings.

The inner layer represented 20% by weight of the total mass of the container.

The inner layer was manufactured with virgin high-density polyethylene, i.e., no materials from flashes or surplus resulting from the transformation process itself or from non-conforming units was included in this layer.

An antimicrobial formulation was added to this inner layer in a percentage equal to 7% by weight with respect to the mass corresponding to this inner layer.

The flashes or surplus resulting from the coextrusion-blowing process was re-processed and included in the outer layer of the plastic container. A small part of the antimicrobial formulation is therefore recycled to also become part of this outer layer.

The antimicrobial formulation used in this practical example was made up of a polymer matrix based on a low-density polyethylene and an active ingredient based on zinc. The concentration of the active ingredient was 2% by weight with respect to the weight of the antimicrobial formulation.

Therefore, given that 7% by weight of antimicrobial formulation is added in the inner layer, and that said antimicrobial formulation comprises 2% by weight of active ingredient, it is achieved that the inner layer of the plastic container comprises 0.14% by weight of antimicrobial active ingredient.

To determine the antimicrobial properties of this plastic container of the invention, plates thereof were cut and subjected, together with control samples corresponding to plastic containers without the antimicrobial formulation, to testing according to Standard JIS Z 2801.

The results are shown in the following table:

| Microorganism | Reference | Exposure time | Count (cfu/sample) | Antimicrobial activity value *R* = [log(B/A)-log(C/A)] |
|---|---|---|---|---|
| *Staphylococcus aureus* (ATCC 6538) | Control | 0 h | 6.5 x 10⁵ | 5.8 |
| | | 24 h | 5.7 x 10⁶ | |
| | 0.1% of active ingredient based on Zn | 24 h | <10 | |
| *Escherichia coli* (ATCC 8739) | Control | 0 h | 1.5 x 10⁵ | 6.2 |
| | | 24 h | 15 x 10⁷ | |
| | 0.1% of active ingredient based on Zn | 24 h | <10 | |

(the active ingredient value of Zn has been rounded down from 0.14% to 0.1% in the table).
where:
Cfu/sample: count of microorganisms in colony forming units on the surface of the material (25 cm²)
The count results shown refer to the mean of the 3 count values (3 study samples).
A: mean viable cell count in control plates at time 0
B: mean viable cell count in control plates at 24 h
C: mean viable cell count in plates with antimicrobial product at 24 h.

According to these results, the samples of the plastic container with the antimicrobial formulation at 0.1% of zinc in the inner layer in contact with the product to be contained show antimicrobial activity against the studied bacteria, i.e., *Staphylococcus aureus* (ATCC 6538) and *Escherichia coli* (ATCC 8739), because a reduction of the inoculated population with respect to the control of more than 2 logarithmic units as specified in standard JIS Z 2801 (point 4) is observed.

Tests were also performed with other higher percentages in which the concentration of active ingredient based on Zn in the inner layer in contact with the product was 0.5% and 1% by weight, respectively. The antimicrobial activity was equally effective for these two tested percentages. The following tables show the results obtained with each of those percentages of active ingredient addition:

| Microorganism | Reference | Exposure time | Count (cfu/sample) | Antimicrobial activity value *R* = [log(B/A)-log(C/A)] |
|---|---|---|---|---|
| *Staphylococcus aureus* (ATCC 6538) | Control | 0 h | 1.7 x 10⁶ | 6.86 |
| | | 24 h | 7.2 x 10⁷ | |
| | 0.5% of active ingredient based on Zn | 24 h | <10 | |
| *Escherichia coli* (ATCC 8739) | Control | 0 h | 3.9 x 10⁵ | 71 |
| | | 24 h | 1.3 x 10⁸ | |
| | 0 5% of active ingredient based on Zn | 24 h | <10 | |
| | | | | |

| Microorganism | Reference | Exposure time | Count (cfu/sample) | Antimicrobial activity value R = [log(B/A)-log(C/A)] |
|---|---|---|---|---|
| *Staphylococcus aureus* (ATCC 6538) | Control | 0 h | 1.7 x 10⁶ | 6.86 |
| | | 24 h | 7.2 x 10⁷ | |
| | 1 % of active ingredient based on Zn | 24 h | <10 | |
| *Escherichia coli* (ATCC 8739) | Control | 0 h | 3.9 x 10⁵ | 7 1 |
| | | 24 h | 1.3 x 10⁸ | |
| | 1 % of active ingredient based on Zn | 24 h | <10 | |

### Example 2:

Plastic containers having a 1000 l capacity made of high-density polyethylene were manufactured by means of coextrusion and blowing. Said containers were made up of two layers of different thicknesses.

The inner layer represented 20% by weight of the total mass of the container.

The inner layer was manufactured with virgin high-density polyethylene, i.e., no materials from flashes or surplus resulting from the transformation process itself or from non-conforming units was included in this layer.

An antimicrobial formulation was added to this inner layer in a percentage equal to 10% by weight with respect to the mass corresponding to this inner layer.

The flashes or surplus resulting from the coextrusion-blowing process was re-processed and included in the outer layer of the plastic container. A small part of the antimicrobial formulation is therefore recycled to also become part of this outer layer.

The antimicrobial formulation used in this practical example was made up of a polymer matrix based on a high-density polyethylene and an active ingredient based on zinc. The grade and reference of high-density polyethylene used in this formulation was the same as that used in the manufacture of the plastic container. The advantage of this formulation is that the polymer matrix of the end container is formed solely by the same type and grade of polymer so the chemical and mechanical properties of the end container will be less altered.

The concentration of the active ingredient was 2% by weight with respect to the weight of the antimicrobial formulation. Therefore, given that 10% of antimicrobial formulation is added in the inner layer, and said antimicrobial formulation comprises 2% by weight of active ingredient, it is achieved that the inner layer of the plastic container comprises 0.2% by weight of antimicrobial active ingredient.

To determine the antimicrobial properties of this plastic container of the invention, plates thereof were cut and subjected, together with control samples corresponding to plastic containers without the antimicrobial formulation, to testing according to Standard JIS Z 2801.

The results are shown in the following table:

| Microorganism | Reference | Exposure time | Count (cfu/sample) | Antimicrobial activity value R = [log(B/A)-log(C/A)] |
|---|---|---|---|---|
| *Staphylococcus aureus* ((ATCC 6538) | Control | 0 h | 2.2 x 10⁵ | > 7.1 |
| | | 24 h | 1.3 x 10⁸ | |
| | 0.2% of active ingredient based on Zn | 24 h | <1.0 x 10¹ | |
| *Escherichia coli* (ATCC 8739) | Control | 0 h | 9.5 x 10⁵ | 7,0 |
| | | 24 h | 2 x 10⁸ | |
| | 0.2% of active ingredient based on Zn | 24 h | 2 x 10¹ | |

| | | | | |
|---|---|---|---|---|
| <1.0 x 10¹ (cfu/sample): limit of detection of the analytical technique used. | | | | |

Therefore, the preceding results show that the containers according to the present invention have considerable advantages with respect to the prior art because they provided considerable protection for the container (and therefore for the product it will contain) against possible microbial contamination.

Although the present invention has been described in reference to a specific embodiment thereof, persons skilled in the art will be able to make modifications and variations to said embodiment without departing from the spirit and scope of the present invention For example, although a plastic container with antimicrobial properties of multiple layers has been described and depicted in the figures, it is evident that containers of a single layer could also be provided by means of the present invention. Likewise, in the case of providing a container of multiple layers, antimicrobial formulation could be included in all the layers, or only in a subset of said layers, provided that at least the innermost layer intended for coming into contact with the product to be contained in the container comprises said antimicrobial formulation

The containers according to the present invention can be manufactured, for example, from polyolefins, more preferably from polyethylene, even more preferably from high-density polyethylene.

Likewise, the antimicrobial formulation according to the present invention can be formulated with resins from the polyolefin family, more preferably the antimicrobial formulation is formulated from polyethylene, for example low-density polyethylene or preferably high-density polyethylene.

## Claims

1. Plastic container with antimicrobial properties formed by at least one layer, **characterized in that** it comprises an antimicrobial formulation made up of a plastic matrix and an active ingredient containing antimicrobial agents, incorporated in at least a innermost layer of the container, which will be in contact with the product to be contained within the container.

2. Plastic container according to the preceding claim, where the amount of active ingredient is equal to or greater than 0.1% by weight with respect to the amount of plastic material of the mentioned inner layer and less than 3% by weight with respect to the amount of plastic material of the mentioned inner layer.

3. Container according to any of the preceding claims, **characterized in that** said antimicrobial active ingredient is selected from the group consisting of agents based on silver, copper, zinc.

4. Container according to any of claims, **characterized in that** the active ingredient is predispersed in a material selected from the group consisting of carbonates, ZnO and SiO₂.

5. Container according to any of the preceding claims, **characterized in that** the plastic matrix is a polyolefin.

6. Container according to any of the preceding claims, **characterized in that** it comprises a plurality of layers, all of said plurality of layers comprising an antimicrobial formulation incorporated therein.

7. Container according to any of the preceding claims for use in the transport and storage of bulk products selected from the group comprising products from the food, cosmetic, pharmaceutical, chemical and potable water industries.

8. Container according to any of the preceding claims for use as a storage container for potable water in facilities relating to the field of construction.

9. Container according to any of the preceding claims, **characterized in that** it is manufactured by means of an extrusion and blowing process in a mold forming the geometry of said container, the antimicrobial formulation being added prior to the step of extrusion.

10. Method of manufacturing a container with antimicrobial properties formed by at least one layer, comprising the steps of:
- placing a mass of plastic material in an extrusion press configured to form a layer of the container;
- adding a specific amount of antimicrobial formulation made up of a plastic matrix and an active ingredient comprising antimicrobial agents;
- mixing the mass of plastic material and the antimicrobial formulation in the extrusion press;
- extruding the mixture of the mass of plastic material and the antimicrobial formulation, comprising a considerably tubular geometry, towards the inside of a mold comprising the geometry of the container;
- injecting air into the tube of the mixture, such that it swells up and occupies the inner cavity of the mold; and
- allowing it to cool until the container has the consistency suitable for being able to remove the mold without damaging the formed container.

11. Method of manufacturing a container according to claim 10, **characterized in that** it comprises additional steps of extruding and blowing additional layers on the outside of the previously formed innermost layer.

12. Method of manufacturing a container according to claim 11, **characterized in that** said additional layers also comprise a mass of plastic material mixed with a specific amount of antimicrobial formulation.

13. Method of manufacturing a container according to any of claims 10-12, **characterized in that** the innermost layer of the container comprises a percentage by weight of active ingredient greater than or equal to 0.1% and less than 3% by weight with respect to the weight of said innermost layer.

14. Method of manufacturing a container according to any of claims 10-13, **characterized in that** said antimicrobial active ingredient is selected from the group consisting of agents based on silver, copper and zinc.

15. Method of manufacturing a container according to any of claims 10-14 **characterized in that** the active ingredient is predispersed in a material selected from the group consisting of carbonates, ZnO and SiO₂.
